# EUROPÄISCHE PATENTSCHRIFT

(11) **EP 3 850 267 B1**
(45) Veröffentlichungstag und Bekanntmachung des Hinweises auf die Patenterteilung: **07.09.2022**
(21) Anmeldenummer: 19742191.0
(22) Anmeldetag: 17.07.2019
(51) Int. Cl.: F17C 13/04

(54) **TANKVORRICHTUNG ZUR SPEICHERUNG EINES GASFÖRMIGEN MEDIUMS**
TANK DEVICE FOR STORING A GASEOUS MEDIUM
ENSEMBLE RÉSERVOIR CONÇU POUR STOCKER UN MILIEU GAZEUX

(30) Priorität: 11.09.2018 DE 102018215384
(43) Veröffentlichungstag der Anmeldung: 21.07.2021
(73) Patentinhaber: Robert Bosch GmbH, 70442 Stuttgart (DE)
(72) Erfinder: RAU, Andreas, 70469 Stuttgart (DE)
(86) Internationale Anmeldenummer: PCT/EP2019/069272
(87) Internationale Veröffentlichungsnummer: WO 2020/052835

(56) Entgegenhaltungen:
- EP-A1- 2 857 727
- US-A1- 2006 219 298
- US-A1- 2009 236 551
- US-B2- 6 675 831

## Beschreibung

Die Erfindung betrifft eine Tankvorrichtung für einen Brennstoffzellentank, insbesondere zur Speicherung von Wasserstoff, beispielsweise zur Anwendung in Fahrzeugen mit Brennstoffzellenantrieb.

### Stand der Technik

Die nicht vorveröffentlichte DE 10 2018 209 057 A1 beschreibt eine Tankvorrichtung zur Temperaturdruckentlastung eines Brennstoffzellentanks, wobei die Tankvorrichtung Tankbehälter mit verschiedenen Ventilen, wie beispielsweise ein Absperrventil, umfasst, welche eine ordentliche Funktionsweise beispielsweise eines Brennstoffzellensystems gewährleisten. Das Dokument US 6675831 B2 zeigt eine Tankvorrichtung zur Speicherung eines gasförmigen Medium.

Die Sicherheitsvorrichtungen für solch eine Tankvorrichtung sind normiert. Dabei muss jede Tankvorrichtung solch ein Absperrventil aufweisen. So kann das Absperrventil bei einer Beschädigung der Tankvorrichtung hervorgerufen durch einen Unfall des Fahrzeugs mit Brennstoffzellenantrieb oder bei einem Bruch einer Leitung der Tankvorrichtung die Tankbehälter verschließen, so dass kein Gas aus der Speichereinheit austreten kann.

Typischerweise weisen solche Absperrventile eine Gaszuführung und eine Gasabführung auf, welche bauartbedingt einen Winkel von ca. 90 Grad zueinander aufweisen. Außerdem weisen sie aufgrund ihrer Bauweise eine große Masse und große äußere Abmessungen auf, was im Falle eines Unfalls aufgrund der hohen auftretenden Beschleunigungskräfte und Verformungen an dem Absperrventil selbst und an dessen Verbindung zu den Tankbehältern zu Undichtigkeiten oder gar zum Bruch des Absperrventils führen kann.

### Vorteile der Erfindung

Die erfindungsgemäße Tankvorrichtung mit den kennzeichnenden Merkmalen des Anspruchs 1 weist demgegenüber den Vorteil auf, dass durch einen rotationssymmetrischen Aufbau des Absperrventils, integriert in die Tankvorrichtung, die Robustheit der Tankvorrichtung gesteigert wird.

Dazu weist die Tankvorrichtung zur Speicherung eines gasförmigen Mediums, beispielsweise Wasserstoff, eine Ventilvorrichtung und einen Tank auf. Die Ventilvorrichtung weist ein Ventilgehäuse mit einer Längsachse auf, in welchem Ventilgehäuse ein Innenraum ausgebildet ist. In dem Innenraum ist ein entlang der Längsachse bewegliches Hauptventilelement angeordnet, welches Hauptventilelement mit einem ersten Ventilsitz zusammenwirkt und so ein Hauptventil ausbildet. Koaxial zu dem Hauptventilelement ist ein entlang der Längsachse bewegliches Ansteuerventilelement angeordnet, welches Ansteuerventilelement zum Öffnen und Schließen einer Einlassöffnung mit einem zweiten Ventilsitz zusammenwirkt und so ein Ansteuerventil ausbildet. Die Ventilvorrichtung umfasst weiterhin eine Magnetspule. Darüber hinaus ist die Einlassöffnung koaxial zu einer Auslassöffnung in dem Ventilgehäuse angeordnet, wodurch die Ventilvorrichtung axial zu der Längsachse anströmbar bzw. abströmbar ist. Weiterhin ist die Magnetspule in dem Ventilgehäuse angeordnet und umgibt das Hauptventilelement und das Ansteuerventilelement.

So kann in konstruktiv einfacher Weise durch Materialminimierung eine Kostenersparnis erzielt werden. Weiterhin können dadurch die Abmessungen und die Masse der Ventilvorrichtung reduziert werden. Dies führt zu einer höheren Dichtheit und Robustheit der Ventilvorrichtung, insbesondere im Falle eines Unfalls.

In erster vorteilhafter Weiterbildung ist es vorgesehen, dass der zweite Ventilsitz an dem Hauptventilelement ausgebildet ist. Vorteilhafterweise ist der erste Ventilsitz an dem Ventilgehäuse ausgebildet.

So können das Hauptventilelement und das Ansteuerventilelement in konstrukitv einfacher Weise in die Ventilvorrichtung integriert werden.

In weiterer Ausgestaltung der Erfindung ist es vorteilhaft vorgesehen, dass das Ansteuerventilelement in einer Ausnehmung des Hauptventilelements zumindest teilweise aufgenommen ist. So kann eine optimale Funktionsweise der gesamten Ventilvorrichtung in Verbindung mit wenig Bauraumbedarf erzielt werden.

In vorteilhafter Weiterbildung ist es vorgesehen, dass ein Strömungsquerschnitt an dem ersten Ventilsitz größer ist als ein Strömungsquerschnitt an dem zweiten Ventilsitz. So kann in einfacher Weise das Ansteuerventilelement über die Magnetspule angesteuert werden, ohne die Benötigung einer hohen Magnetkraft. Ist der zweite Ventilsitz geöffnet, so kann durch Verringerung der Druckunterschiede in dem Tank und einem außerhalb der Tankvorrichtung angeordnetem System eine einfache Öffnung des ersten Ventilsitzes ohne zusätzliche äußere Kräfte gewährleistet werden.

In weiterer Ausgestaltung der Erfindung ist es vorgesehen, dass der Tank einen Halsbereich aufweist, in welchem Halsbereich eine Durchlassöffnung ausgebildet ist und welche Durchlassöffnung in den Tankinnenraum mündet, wobei die Ventilvorrichtung in der Durchlassöffnung angeordnet ist. So kann die Robustheit der gesamten Tankvorrichtung gewährleistet werden, da durch die Integration der Ventilvorrichtung in den Tank eine hohe Stabilität erzielbar ist. Auch im Falle eines Unfalls ist die Ventilvorrichtung vor äußeren Einflüssen geschützt.

In vorteilhafter Weiterbildung ist es vorgesehen, dass der Innenraum des Ventilgehäuses mittels der Einlassöffnung mit dem Tankinnenraum verbindbar ist. So kann die Ventilvorrichtung in einfacher Weise gasförmiges Medium aus dem Tank oder in den Tank fördern.

In vorteilhafter Weiterbildung ist es vorgesehen, dass der Innenraum durch das Hauptventilelement und das Ansteuerventilelement in einen Hauptventilraum und einen Ansteuerventilraum aufgeteilt ist, welcher Hauptventilraum und welcher Ansteuerventilraum mittels des ersten Ventilsitzes und des zweiten Ventilsitzes miteinander verbindbar sind. Vorteilhafterweise weist das Ansteuerventilelement mindestens eine Querbohrung auf, durch welche Querbohrung eine Ausnehmung des Ansteuerventilelements mit dem Ansteuerventilraum verbindbar ist.

In weiterer Ausgestaltung der Erfindung ist es vorgesehen, dass in der Ausnehmung des Ansteuerventilelements eine Ansteuerventilfeder angeordnet ist, durch welche Ansteuerventilfeder das Ansteuerventilelement in Richtung des zweiten Ventilsitzes vorgespannt ist.

In vorteilhafter Weiterbildung ist es vorgesehen, dass in dem Innenraum eine Hauptventilfeder angeordnet ist, welche Hauptventilfeder das Hauptventilelement mit einer Kraft in Richtung des Ansteuerventilelements - entgegengesetzt der Kraft der Ansteuerventilfeder - beaufschlagt.

In vorteilhafter Weiterbildung ist die Kraft der Hauptventilfeder kleiner als die Kraft der Ansteuerventilfeder. Anderenfalls würde die Hauptventilfeder die Ansteuerventilfeder überdrücken und der erste Ventilsitz und der zweite Ventilsitz wären auch ohne Ansteuerung über die Magnetspule freigegeben. Ist die Kraft der Hauptventilfeder jedoch kleiner als die Kraft der Ansteuerventilfeder ist die Dichtheit an dem ersten Ventilsitz und dem zweiten Ventilsitz gewährleistet.

In weiterer Ausgestaltung der Erfindung ist es vorteilhaft vorgesehen, dass in dem Ventilgehäuse Dichtelemente angeordnet sind, durch welche Dichtelemente die Magnetspule von dem Innenraum des Ventilgehäuses abgedichtet ist. So ist eine optimale Funktionsweise der Magnetspule erzielbar.

Die beschriebene Tankvorrichtung eignet sich vorzugsweise in einer Brennstoffzellenanordnung zur Speicherung von Wasserstoff für den Betrieb einer Brennstoffzelle.

### Zeichnungen

In der Zeichnung sind Ausführungsbeispiele einer erfindungsgemäßen Tankvorrichtung zur Speicherung eines gasförmigen Mediums, insbesondere Wasserstoff, dargestellt. Es zeigt in
- Fig. 1: ein erstes Ausführungsbeispiel einer erfindungsgemäßen Tankvorrichtung mit einer Ventilvorrichtung im Längsschnitt,
- Fig. 2: die Ventilvorrichtung aus der Fig.1 im Längsschnitt,
- Fig. 3: ein zweites Ausführungsbeispiel der erfindungsgemäßen Tankvorrichtung im Bereich der Ventilvorrichtung im Längsschnitt,
- Fig. 4: ein drittes Ausführungsbeispiel der erfindungsgemäßen Tankvorrichtung im Bereich der Ventilvorrichtung im Längsschnitt,
- Fig. 5: ein viertes Ausführungsbeispiel der erfindungsgemäßen Tankvorrichtung im Bereich der Ventilvorrichtung im Längsschnitt.

### Beschreibung der Ausführungsbeispiele

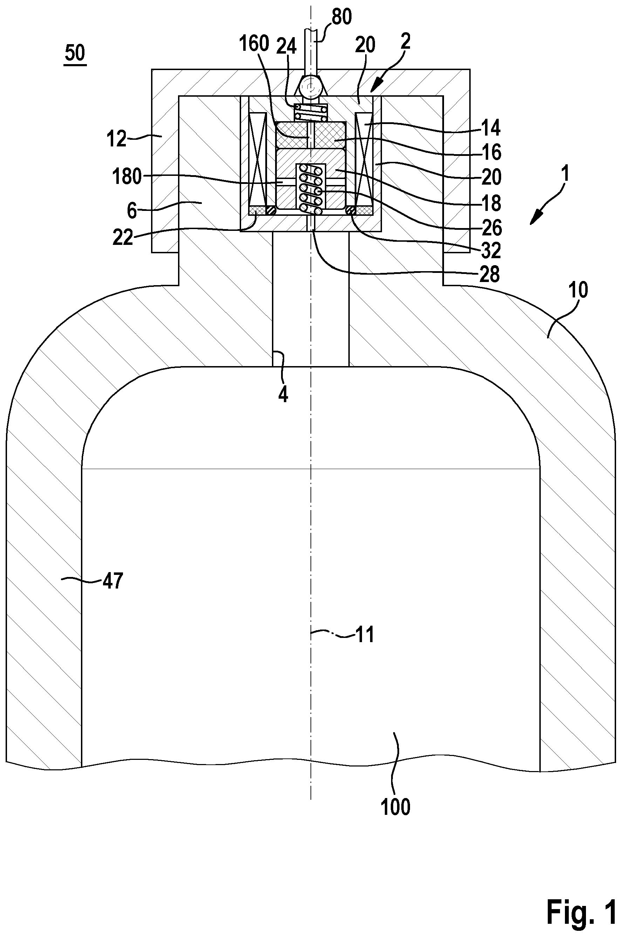

In der **Fig.1** ist ein erstes Ausführungsbeispiel einer erfindungsgemäßen Tankvorrichtung 1 für ein gasförmiges Medium gezeigt. Die Tankvorrichtung 1 weist einen Tank 10 und eine Ventilvorrichtung 2 auf. Der Tank 10 weist ein Tankgehäuse 47 auf, in dem ein Tankinnenraum 100 ausgebildet ist. Das Tankgehäuse 47 umfasst weiterhin einen Halsbereich 6, in dem eine Durchlassöffnung 4 ausgebildet ist. Diese Durchlassöffnung 4 mündet an einem Ende in den Tankinnenraum 100, in dem gasförmiges Medium, beispielsweise Wasserstoff, gespeichert werden kann.

An dem anderen Ende des Halsbereichs 6 ist die Ventilvorrichtung 2 in der Durchlassöffnung 4 des Tanks 10 angeordnet und in das Tankgehäuse 47 des Tanks 10 integriert. Der Halsbereich 6 wird außerdem von einem Ummantelungselement 12 umgeben, so dass die Ventilvorrichtung 2 und der Tankinnenraum 100 von einer Umgebung 50 abgedichtet sind.

Gasförmiges Medium, insbesondere Wasserstoff, kann so beispielsweise einem Anodenbereich einer Brennstoffzelle in einer Brennstoffzellenanordnung über die Ventilvorrichtung 2 aus dem Tankinnenraum 100 über einen Durchlasskanal 80 in dem Ummantelungselement 12 zugeführt werden.

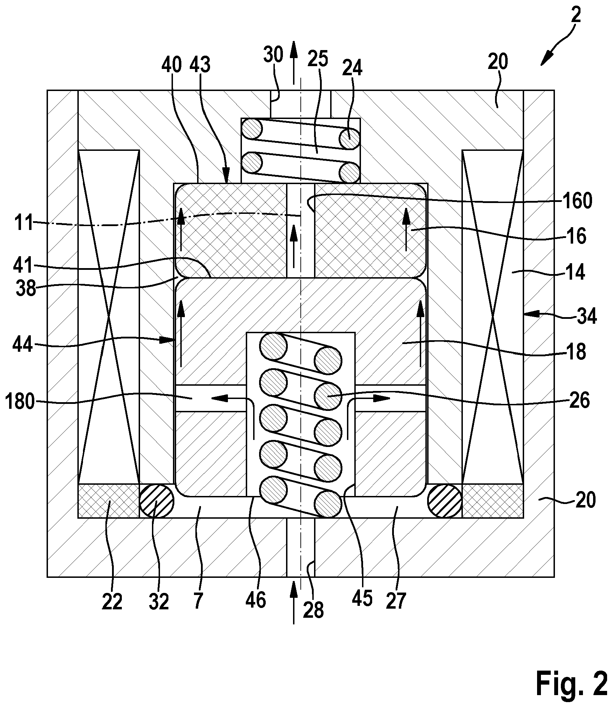

**Fig.2** zeigt einen vergrößerten Ausschnitt aus der **Fig.1** im Bereich der Ventilvorrichtung 2.

Die Ventilvorrichtung 2 weist ein Ventilgehäuse 20 mit einer Längsachse 11 auf, in dem ein stufenförmiger Innenraum 7 ausgebildet ist. Die Ventilvorrichtung 2 weist in dem Ventilgehäuse 20 eine Einlassöffnung 28 und eine Auslassöffnung 30 auf, wobei die Einlassöffnung 28 in die Durchlassöffnung 4 des Tanks 10 in dem Halsbereich 6 mündet. Sowohl die Anströmung als auch die Abströmung der Ventilvorrichtung 2 erfolgt hier axial zu der Längsachse 11 der Ventilvorrichtung 2.

Weiterhin ist in dem Ventilgehäuse 20 eine Magnetspule 14 aufgenommen und integriert, wobei die Magnetspule 14 mittels eines Stützelements 22 in dem Ventilgehäuse 20 fixiert und mittels eines Dichtelements 32 an dem Stützelement 22 gegen den Innenraum 7 abgedichtet ist.

In dem Innenraum 7 ist ein entlang der Längsachse 11 bewegliches Hauptventilelement 16 und koaxial dazu ein längsbewegliches Ansteuerventilelement 18 angeordnet. Das Hauptventilelement 16 und das Ansteuerventilelement 18 teilen den Innenraum 7 in einen Hauptventilraum 25 und einen Ansteuerventilraum 27 auf. Der Hauptventilraum 25 mündet dabei in die Auslassöffnung 30, wohingegen der Ansteuerventilraum 27 in die Einlassöffnung 28 mündet.

Zwischen dem Ventilgehäuse 20, dem Hauptventilelement 16 und dem Ansteuerventilelement 18 ist ein äußerer Ringraum 38 ausgebildet, über welchen der Ansteuerventilraum 27 mit der Auslassöffnung 30 verbindbar ist.

Das Hauptventilelement 16 bildet zusammen mit einem ersten Ventilsitz 40 an dem Ventilgehäuse 20 ein Hauptventil 43 aus, wodurch eine Verbindung zwischen dem Hauptventilraum 25 und dem Ansteuerventilraum 27 geöffnet und geschlossen werden kann. Weiterhin weist das Hauptventilelement 16 eine Durchlassöffnung 160 auf, welche in den Hauptventilraum 25 mündet.

Das Ansteuerventilelement 18 bildet zusammen mit einem zweiten Ventilsitz 41, welcher an dem Hauptventilelement 16 ausgebildet ist, ein Ansteuerventil 44 aus. Durch das Ansteuerventil 44 kann eine weitere Verbindung zwischen dem Hauptventilraum 25 und dem Ansteuerventilraum 27 über die Durchlassöffnung 160 geöffnet und geschlossen werden.

Ein Strömungsquerschnitt des gasförmigen Mediums an dem ersten Ventilsitz 40 ist dabei größer als ein Strömungsquerschnitt des gasförmigen Mediums an dem zweiten Ventilsitz 41, da der Durchmesser des zylinderförmig ausgebildeten Hauptventilraums 25 größer ist als der Durchmesser der zylinderförmigen Durchlassöffnung 160.

Weiterhin weist das Ansteuerventilelement 18 eine Ausnehmung 45 auf, welche durch Querbohrungen 180 und eine Öffnung 46 mit dem Ansteuerventilraum 27 verbunden ist. In der Ausnehmung 45 ist außerdem eine Ansteuerventilfeder 26 angeordnet, welche sich einerseits an dem Ventilgehäuse 20 und andererseits an dem Ansteuerventilelement 18 abstützt und welche das Ansteuerventilelement 18 in Richtung des zweiten Ventilsitzes 41 drückt.

In dem Hauptventilraum 25 ist eine Hauptventilfeder 24 angeordnet, welche sich einerseits an dem Ventilgehäuse 20 und andererseits an dem Hauptventilelement 16 abstützt und welche das Hauptventilelement 16 mit einer Kraft in Richtung des zweiten Ventilsitzes 41 beaufschlagt.

Das Ventilgehäuse 20 ist hier mehrteilig ausgebildet, so dass die Magnetspule 14 zwischen dem mehrteiligen Ventilgehäuse 20 aufgenommen und integriert ist. Das Ventilgehäuse 20 und das Ansteuerventilelement 18 sind aus einem ferromagnetischen Werkstoff hergestellt, wohingegen das Hauptventilelement 16 und das Stützelement 22 aus einem nicht ferromagnetischen Werkstoff hergestellt sind.

Zur Verbesserung der Gasdichtheit ist das Hauptventilelement 16 vorteilhafterweise aus Kunststoff hergestellt.

In einer alternativen Ausführung ist das Hauptventilelement 16 aus einem metallischen, nicht magnetischen Werkstoff hergestellt.

Zur Verbesserung der Gasdichtheit sind in einer alternativen Ausführung elastische Dichtelemente an dem ersten Ventilsitz 40 und an dem zweiten Ventilsitz 41 angeordnet.

### Funktionsweise der Ventilvorrichtung

Bei nicht bestromter Magnetspule 14 sind der erste Ventilsitz 40 und der zweite Ventilsitz 41 durch die Kraft der Ansteuerventilfeder 26 geschlossen, so dass die Verbindungen zwischen dem Hauptventilraum 25 und dem Ansteuerventilraum 27 geschlossen sind. Somit kann auch kein gasförmiges Medium aus dem Tankinnenraum 100 über die Einlassöffnung 28 und die Auslassöffnung 30 in Richtung eines Systems, beispielsweise die Brennstoffzellenanordnung, strömen. In dem Tankinnenraum 100 herrscht Hochdruck von beispielsweise 700 bar. In der Brennstoffzellenanordnung hingegen herrscht Niederdruck.

Wird die Magnetspule 14 bestromt, so wird eine magnetische Kraft auf das Ansteuerventilelement 18 erzeugt, welche der Kraft der Ansteuerventilfeder 26 entgegengerichtet ist. Dies führt dazu, dass das Ansteuerventilelement 18 von dem zweiten Ventilsitz 41 abhebt und diesen freigibt. Die Verbindung zwischen dem Hauptventilraum 25 und dem Ansteuerventilraum 27 über die Durchlassöffnung 160 und den äußeren Ringraum 38 ist nun freigegeben. Gasförmiges Medium strömt nun über den zweiten Ventilsitz 41 aus dem Tankinnenraum 100 in Richtung des Systems (siehe Pfeile in **Fig.2**). Dadurch steigt der Druck in dem System an, was eine Verringerung der Druckdifferenz an dem Hauptventilelement 16 zur Folge hat.

Der Strömungsquerschnitt an dem zweiten Ventilsitz 41 ist jedoch nicht ausreichend, um ein System, beispielsweise eine Brennstoffzellenanordnung, in allen Betriebszuständen mit gasförmigem Medium, hier Wasserstoff, zu versorgen.

Jedoch wird durch den immer höher ansteigenden Druck im System dieser nahezu an den Druck im Tankinnenraum 100 angepasst. Dies führt dazu, dass mit Hilfe der Kraft der Hauptventilfeder 24 das Hauptventilelement 16 von dem ersten Ventilsitz 40 abhebt und diesen freigibt. Somit ist die Wasserstoff-Versorgung der Brennstoffzelle sichergestellt, da nun zusätzlich zu dem Medienstrom über den zweiten Ventilsitz 41 auch über den ersten Ventilsitz 40 und den äußeren Ringraum 38 gasförmiges Medium aus dem Tankinnenraum 100 in Richtung des Systems strömen kann.

Soll die Wasserstoff-Zufuhr zu der Brennstoffzelle unterbrochen werden, wird die Magnetspule 14 nicht weiter bestromt, so dass die magnetische Kraft abgebaut wird und sich das Ansteuerventilelement 18 mittels der Kraft der Ansteuerventilfeder 26 wieder in Richtung des zweiten Ventilsitzes 41 bewegt und diesen schließt. Das Ansteuerventilelement 18 wirkt hier als Mitnehmer für das Hauptventilelement 16, so dass auch der erste Ventilsitz 40 wieder geschlossen ist. Dies ist möglich, da die Kraft der Hauptventilfeder 24 kleiner ist als die Kraft der Ansteuerventilfeder 26 und die Hauptventilfeder 24 somit von der Ansteuerventilfeder 26 überdrückt wird.

Der Durchmesser an dem ersten Ventilsitz 40 und der Hub des Hauptventilelements 16 ist vorteilhafterweise so ausgelegt, dass die Brennstoffzelle in allen Betriebszuständen mit einem ausreichenden Massenstrom an Wasserstoff versorgt wird. Außerdem kann dadurch im Falle einer Befüllung des Tanks 10 mit gasförmigem Medium, hier Wasserstoff, bei dem die Strömrichtung von der Auslassöffnung 30 in Richtung der Einlassöffnung 28 verläuft, der Tank 10 in kurzer Zeit, beispielsweise in wenigen Minuten, befüllt werden.

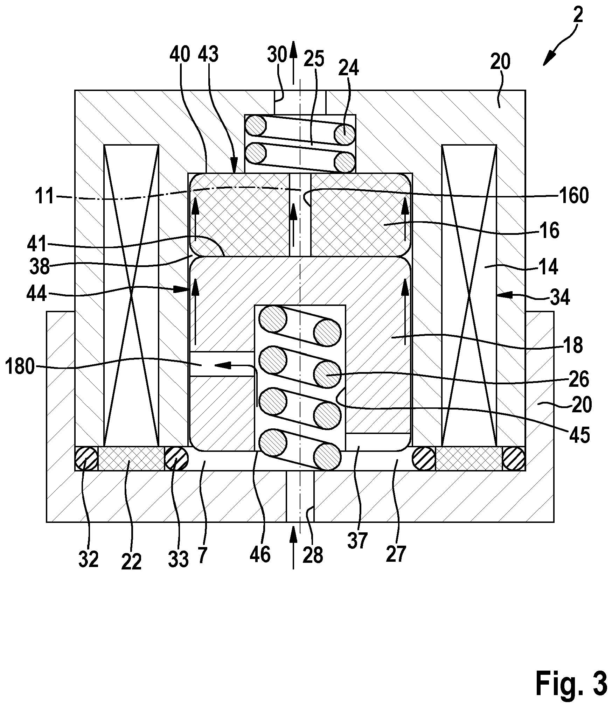

**Fig.3** zeigt ein zweites Ausführungsbeispiel der erfindungsgemäßen Tankvorrichtung 1 im Bereich der Ventilvorrichtung 2. Bauteile mit gleicher Funktion wurden mit derselben Bezugsziffer bezeichnet.

Das zweite Ausführungsbeispiel entspricht in Aufbau und Funktionsweise weitestgehend dem ersten Ausführungsbeispiel. Hier sind weitere Dichtelemente 33 angeordnet, um die Magnetspule 14 gegen den Innenraum 7 der Ventilvorrichtung 2 abzudichten. Weiterhin weist das Ansteuerventilelement 18 eine weitere Ausnehmung 37 auf, um bei geöffneten Ventilsitzen 40, 41 eine hohe pneumatische Anbindung sicherzustellen.

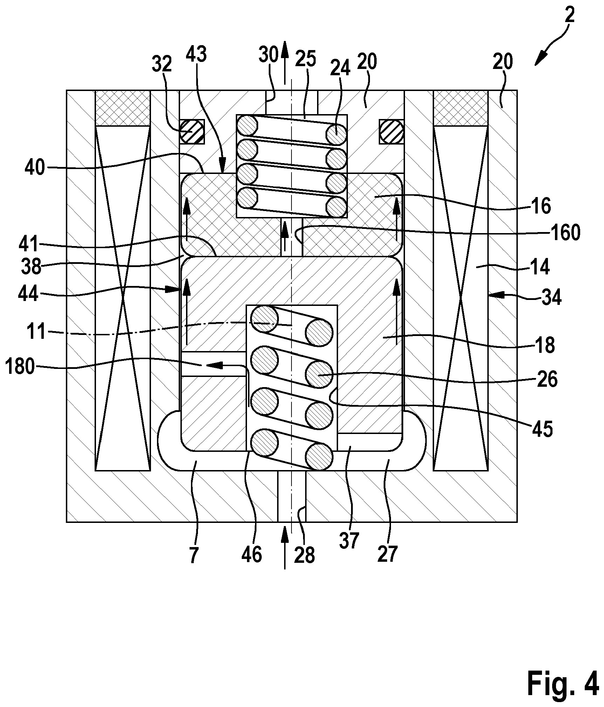

**Fig.4** zeigt ein drittes Ausführungsbeispiel der erfindungsgemäßen Tankvorrichtung 1 im Bereich der Ventilvorrichtung 2. Bauteile mit gleicher Funktion wurden mit derselben Bezugsziffer bezeichnet.

Das dritte Ausführungsbeispiel entspricht in Aufbau und Funktionsweise weitestgehend dem zweiten Ausführungsbeispiel. Hier ist der Querschnitt des Ansteuerventilraums 27 vergrößert, um den magnetischen Widerstand zu erhöhen und einen möglichen magnetischen Kurzschluss zu verhindern. So wird sichergestellt, dass sich die Magnetfeldlinien nicht nur um die Magnetspule 14 herum aufbauen und einen Magnetkreislauf schließen, sondern dass zur Bildung des Magnetkreislaufs das Ansteuerventilelement 18 notwendig ist. Dadurch ist eine ordentliche Funktionsweise der Ventilvorrichtung 2 gewährleistet.

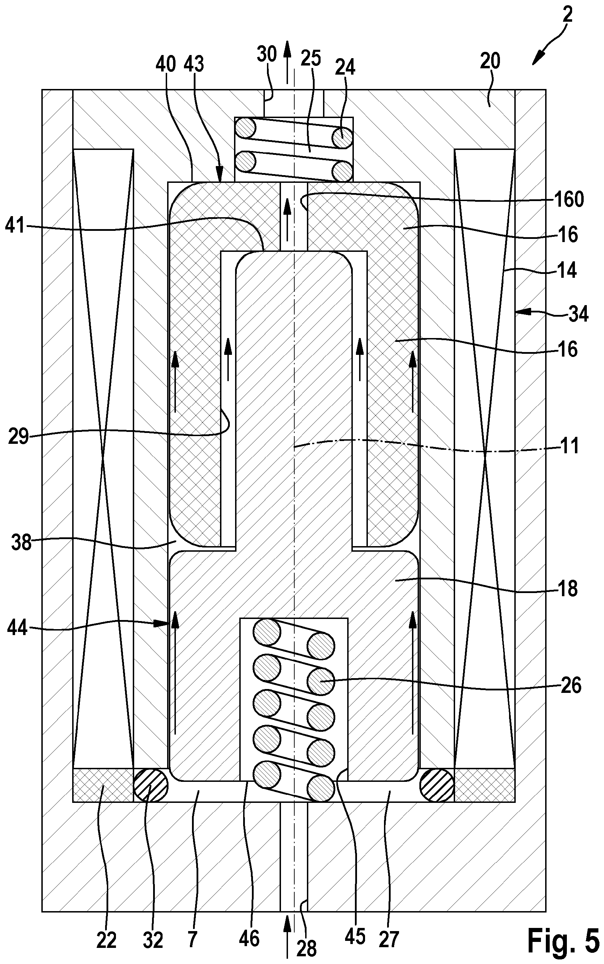

**Fig.5** zeigt ein viertes Ausführungsbeispiel der erfindungsgemäßen Tankvorrichtung 1 im Bereich der Ventilvorrichtung 2. Bauteile mit gleicher Funktion wurden mit derselben Bezugsziffer bezeichnet.

Das vierte Ausführungsbeispiel entspricht in Aufbau und Funktionsweise weitestgehend dem ersten Ausführungsbeispiel. Im Unterschied zum ersten Ausführungsbeispiel weist das Ansteuerventilelement 18 hier keine Querbohrungen 180 auf. Weiterhin weist das Hauptventilelement 16 eine Ausnehmung 29 auf, in welcher das Ansteuerventilelement 18 teilweise aufgenommen ist. Der zweite Ventilsitz 41 ist hier somit in der Ausnehmung 29 des Hauptventilelements 16 ausgebildet.

Die Tankvorrichtung 1 ist nicht auf die Verwendung in einer Brennstoffzellenanordnung beschränkt, sondern kann auch in anderen Systemen, beispielsweise bei Fahrzeugen mit kryogenem Kraftstoff, verwendet werden.

Die Strömrichtung des Wasserstoffs aus dem Tank 10 ist durch die Pfeile in den **Fig.2** bis **Fig.5** dargestellt. Eine Befüllung des Tanks 10 mit gasförmigem Medium, hier Wasserstoff, dreht die Strömrichtung des Wasserstoffs, die Befüllung erfolgt also entgegen der Pfeile in den **Fig.2** bis **Fig.5**.

## Patentansprüche

1. Tankvorrichtung (1) zur Speicherung eines gasförmigen Mediums, insbesondere Wasserstoff, mit einer Ventilvorrichtung (2) und einem Tank (10), wobei die Ventilvorrichtung (2) ein Ventilgehäuse (20) mit einer Längsachse (11) aufweist, in welchem Ventilgehäuse (20) ein Innenraum (7) ausgebildet ist, in welchem Innenraum (7) ein entlang der Längsachse (11) bewegliches Hauptventilelement (16) angeordnet ist, welches Hauptventilelement (16) mit einem ersten Ventilsitz (40) zusammenwirkt und so ein Hauptventil (43) ausbildet, wobei koaxial zu dem Hauptventilelement (16) ein entlang der Längsachse (11) bewegliches Ansteuerventilelement (18) angeordnet ist, welches Ansteuerventilelement (18) zum Öffnen und Schließen einer Einlassöffnung (160) mit einem zweiten Ventilsitz (41) zusammenwirkt und so ein Ansteuerventil (44) ausbildet, wobei die Ventilvorrichtung (2) eine Magnetspule (14) umfasst, **dadurch gekennzeichnet, dass** die Einlassöffnung (28) koaxial zu einer Auslassöffnung (30) in dem Ventilgehäuse (20) angeordnet ist, wodurch die Ventilvorrichtung (2) axial zu der Längsachse (11) anströmbar bzw. abströmbar ist und die Magnetspule (14) in dem Ventilgehäuse (20) angeordnet ist und das Hauptventilelement (16) und das Ansteuerventilelement (18) umgibt.

2. Tankvorrichtung (1) nach Anspruch 1, **dadurch gekennzeichnet, dass** der zweite Ventilsitz (41) an dem Hauptventilelement (16) ausgebildet ist.

3. Tankvorrichtung (1) nach einem der vorhergehenden Ansprüche, **dadurch gekennzeichnet, dass** der erste Ventilsitz (40) an dem Ventilgehäuse (20) ausgebildet ist.

4. Tankvorrichtung (1) nach einem der vorhergehenden Ansprüche, **dadurch gekennzeichnet, dass** das Ansteuerventilelement (18) in einer Ausnehmung (29) des Hauptventilelements (16) zumindest teilweise aufgenommen ist.

5. Tankvorrichtung (1) nach einem der vorhergehenden Ansprüche, **dadurch gekennzeichnet, dass** ein Strömungsquerschnitt an dem ersten Ventilsitz (40) größer ist als ein Strömungsquerschnitt an dem zweiten Ventilsitz (41).

6. Tankvorrichtung (1) nach einem der vorhergehenden Ansprüche, **dadurch gekennzeichnet, dass** der Tank (10) einen Halsbereich (6) aufweist, in welchem Halsbereich (6) eine Durchlassöffnung (4) ausgebildet ist und welche Durchlassöffnung (4) in einen Tankinnenraum (100) mündet, wobei die Ventilvorrichtung (2) in der Durchlassöffnung (4) angeordnet ist.

7. Tankvorrichtung (1) nach Anspruch 6, **dadurch gekennzeichnet, dass** der Innenraum (7) des Ventilgehäuses (20) mittels der Einlassöffnung (28) mit dem Tankinnenraum (100) verbindbar ist.

8. Tankvorrichtung (1) nach einem der vorhergehenden Ansprüche, **dadurch gekennzeichnet, dass** der Innenraum (7) durch das Hauptventilelement (16) und das Ansteuerventilelement (18) in einen Hauptventilraum (25) und einen Ansteuerventilraum (27) aufgeteilt ist, welcher Hauptventilraum (25) und welcher Ansteuerventilraum (27) mittels des ersten Ventilsitzes (40) und des zweiten Ventilsitzes (41) miteinander verbindbar sind.

9. Tankvorrichtung (1) nach Anspruch 8, **dadurch gekennzeichnet, dass** das Ansteuerventilelement (18) mindestens eine Querbohrung (180) aufweist, durch welche Querbohrung (180) eine Ausnehmung (45) des Ansteuerventilelements (18) mit dem Ansteuerventilraum (27) verbindbar ist.

10. Tankvorrichtung (1) nach Anspruch 9, **dadurch gekennzeichnet, dass** in der Ausnehmung (45) des Ansteuerventilelements (18) eine Ansteuerventilfeder (26) angeordnet ist, durch welche Ansteuerventilfeder (26) das Ansteuerventilelement (18) in Richtung des zweiten Ventilsitzes (41) vorgespannt ist.

11. Tankvorrichtung (1) nach Anspruch 10, **dadurch gekennzeichnet, dass** in dem Innenraum (7) eine Hauptventilfeder (24) angeordnet ist, welche Hauptventilfeder (24) das Hauptventilelement (16) mit einer Kraft in Richtung des Ansteuerventilelements (18) - entgegengesetzt der Kraft der Ansteuerventilfeder (26) - beaufschlagt.

12. Tankvorrichtung (1) nach Anspruch 11, **dadurch gekennzeichnet, dass** die Kraft der Hauptventilfeder (24) kleiner ist als die Kraft der Ansteuerventilfeder.

13. Tankvorrichtung (1) nach einem der vorhergehenden Ansprüche, **dadurch gekennzeichnet, dass** in dem Ventilgehäuse (20) Dichtelemente (32, 33) angeordnet sind, durch welche Dichtelemente (32, 33) die Magnetspule (14) von dem Innenraum (7) des Ventilgehäuses (20) abgedichtet ist.

14. Brennstoffzellenanordnung mit einer Tankvorrichtung (1) zur Speicherung von Wasserstoff für den Betrieb einer Brennstoffzelle nach einem der vorhergehenden Ansprüche.

## Claims

1. Tank device (1) for storing a gaseous medium, in particular hydrogen, having a valve device (2) and a tank (10), wherein the valve device (2) has a valve housing (20) with a longitudinal axis (11), in which valve housing (20) is formed an inner chamber (7), in which inner chamber (7) a main valve element (16) movable along the longitudinal axis (11) is arranged, which main valve element (16) interacts with a first valve seat (40) and thus forms a main valve (43), wherein a pilot valve element (18) movable along the longitudinal axis (11) is arranged coaxially with the main valve element (16), which pilot valve element (18) interacts with a second valve seat (41) in order to open and close an inlet opening (160) and thus forms a pilot valve (44), wherein the valve device (2) comprises a magnet coil (14), **characterized in that** the inlet opening (28) is arranged in the valve housing (20) coaxially with an outlet opening (30), whereby the gaseous medium can flow toward the valve device (2) or away therefrom axially with respect to the longitudinal axis (11), and the magnet coil (14) is arranged in the valve housing (20) and surrounds the main valve element (16) and the pilot valve element (18).

2. Tank device (1) according to Claim 1, **characterized in that** the second valve seat (41) is formed on the main valve element (16).

3. Tank device (1) according to either of the preceding claims, **characterized in that** the first valve seat (40) is formed on the valve housing (20).

4. Tank device (1) according to any of the preceding claims, **characterized in that** the pilot valve element (18) is accommodated at least partially in a recess (29) of the main valve element (16).

5. Tank device (1) according to any of the preceding claims, **characterized in that** a flow cross section at the first valve seat (40) is larger than a flow cross section at the second valve seat (41).

6. Tank device (1) according to any of the preceding claims, **characterized in that** the tank (10) has a neck region (6), in which neck region (6) a passage opening (4) is formed and which passage opening (4) opens into a tank interior (100), wherein the valve device (2) is arranged in the passage opening (4).

7. Tank device (1) according to Claim 6, **characterized in that** the inner chamber (7) of the valve housing (20) can be connected to the tank interior (100) by means of the inlet opening (28).

8. Tank device (1) according to any of the preceding claims, **characterized in that** the inner chamber (7) is divided by the main valve element (16) and the pilot valve element (18) into a main valve chamber (25) and a pilot valve chamber (27), and which main valve chamber (25) and which pilot valve chamber (27) can be connected to one another by means of the first valve seat (40) and of the second valve seat (41).

9. Device (1) according to Claim 8, **characterized in that** the pilot valve element (18) has at least one transverse hole (180), through which transverse hole (180) a recess (45) of the pilot valve element (18) can be connected to the pilot valve chamber (27).

10. Tank device (1) according to Claim 9, **characterized in that** a pilot valve spring (26) is arranged in the recess (45) of the pilot valve element (18), by means of which pilot valve spring (26) the pilot valve element (18) is preloaded in the direction of the second valve seat (41) .

11. Tank device (1) according to Claim 10, **characterized in that** a main valve spring (24) is arranged in the inner chamber (7), which main valve spring (24) subjects the main valve element (16) to a force in the direction of the pilot valve element (18) counter to the force of the pilot valve spring (26).

12. Tank device (1) according to Claim 11, **characterized in that** the force of the main valve spring (24) is less than the force of the pilot valve spring.

13. Tank device (1) according to any of the preceding claims, **characterized in that** sealing elements (32, 33) are arranged in the valve housing (20), by means of which sealing elements (32, 33) the magnet coil (14) is sealed off from the inner chamber (7) of the valve housing (20).

14. Fuel cell arrangement having a tank device (1) for storing hydrogen for operating a fuel cell according to any of the preceding claims.

## Revendications

1. Ensemble réservoir (1) servant à stocker un milieu gazeux, en particulier de l'hydrogène, comportant un dispositif à soupapes (2) et un réservoir (10), le dispositif à soupapes (2) présentant un carter de soupape (20) doté d'un axe longitudinal (11), carter de soupape (20) dans lequel un espace intérieur (7) est formé, espace intérieur (7) dans lequel est disposé un élément de soupape principale (16) mobile le long de l'axe longitudinal (11), lequel élément de soupape principale (16) coopère avec un premier siège de soupape (40) et forme ainsi une soupape principale (43), un élément de soupape de commande (18) mobile le long de l'axe longitudinal (11) étant disposé coaxialement à l'élément de soupape principale (16), lequel élément de soupape de commande (18) coopère avec un deuxième siège de soupape (41) pour l'ouverture et la fermeture d'une ouverture d'admission (160) et forme ainsi une soupape de commande (44), le dispositif à soupapes (2) comprenant une bobine magnétique (14), **caractérisé en ce que** l'ouverture d'admission (28) est disposée coaxialement à une ouverture de sortie (30) dans le carter de soupape (20), de sorte qu'un écoulement peut entrer dans le dispositif à soupapes (2) ou s'écouler hors de celui-ci axialement par rapport à l'axe longitudinal (11) et la bobine magnétique (14) est disposée dans le carter de soupape (20) et entoure l'élément de soupape principale (16) et l'élément de soupape de commande (18) .

2. Ensemble réservoir (1) selon la revendication 1, **caractérisé en ce que** le deuxième siège de soupape (41) est formé sur l'élément de soupape principale (16).

3. Ensemble réservoir (1) selon l'une des revendications précédentes, **caractérisé en ce que** le premier siège de soupape (40) est formé sur le carter de soupape (20).

4. Ensemble réservoir (1) selon l'une des revendications précédentes, **caractérisé en ce que** l'élément de soupape de commande (18) est reçu au moins partiellement dans un évidement (29) de l'élément de soupape principale (16).

5. Ensemble réservoir (1) selon l'une des revendications précédentes, **caractérisé en ce qu'**une section transversale d'écoulement au niveau du premier siège de soupape (40) est plus grande qu'une section transversale d'écoulement au niveau du deuxième siège de soupape (41).

6. Ensemble réservoir (1) selon l'une des revendications précédentes, **caractérisé en ce que** le réservoir (10) présente une région de col (6), région de col (6) dans laquelle une ouverture de passage (4) est formée et laquelle ouverture de passage (4) débouche dans un espace intérieur de réservoir (100), le dispositif à soupapes (2) étant disposé dans l'ouverture de passage (4).

7. Ensemble réservoir (1) selon la revendication 6, **caractérisé en ce que** l'espace intérieur (7) du carter de soupape (20) peut être relié à l'espace intérieur de réservoir (100) au moyen de l'ouverture d'admission (28) .

8. Ensemble réservoir (1) selon l'une des revendications précédentes, **caractérisé en ce que** l'espace intérieur (7) est divisé par l'élément de soupape principale (16) et l'élément de soupape de commande (18) en un espace de soupape principale (25) et un espace de soupape de commande (27), lequel espace de soupape principale (25) et lequel espace de soupape de commande (27) peuvent être reliés l'un à l'autre au moyen du premier siège de soupape (40) et du deuxième siège de soupape (41).

9. Ensemble réservoir (1) selon la revendication 8, **caractérisé en ce que** l'espace de soupape de commande (18) présente au moins un alésage transversal (180), alésage transversal (180) par le biais duquel un évidement (45) de l'élément de soupape de commande (18) peut être relié à l'espace de soupape de commande (27).

10. Ensemble réservoir (1) selon la revendication 9, **caractérisé en ce qu'**un ressort de soupape de commande (26) est disposé dans l'évidement (45) de l'élément de soupape de commande (18), ressort de soupape de commande (26) par le biais duquel l'élément de soupape de commande (18) est précontraint en direction du deuxième siège de soupape (41).

11. Ensemble réservoir (1) selon la revendication 10, **caractérisé en ce qu'**un ressort de soupape principale (24) est disposé dans l'espace intérieur (7), lequel ressort de soupape principale (24) sollicite l'élément de soupape principale (16) avec une force en direction de l'élément de soupape de commande (18), de manière opposée à la force du ressort de soupape de commande (26) .

12. Ensemble réservoir (1) selon la revendication 11, **caractérisé en ce que** la force du ressort de soupape principale (24) est inférieure à la force du ressort de soupape de commande.

13. Ensemble réservoir (1) selon l'une des revendications précédentes, **caractérisé en ce que** des éléments d'étanchéité (32, 33) sont disposés dans le carter de soupape (20), éléments d'étanchéité (32, 33) par le biais desquels la bobine magnétique (14) est rendue étanche par rapport à l'espace intérieur (7) du carter de soupape (20).

14. Ensemble pile à combustible comportant un dispositif réservoir (1) servant à stocker de l'hydrogène pour le fonctionnement d'une pile à combustible selon l'une des revendications précédentes.
